# EUROPEAN PATENT APPLICATION

(11) **EP 4 692 743 A1**
(43) Date of publication of application: **11.02.2026**
(21) Application number: 24779622.0
(22) Date of filing: 18.03.2024
(51) Int. Cl.: G01K 7/24, G08C 25/00

(54) **TEMPERATURE DETECTION SYSTEM**

(30) Priority: 29.03.2023 JP 2023053409
(71) Applicant: Panasonic Intellectual Property Management Co., Ltd., Kadoma-shi, Osaka 571-0057 (JP)
(72) Inventor: OHMORI Chikara, Kadoma-shi, Osaka 571-0057 (JP); MORIMOTO Naohisa, Kadoma-shi, Osaka 571-0057 (JP); YAMANAKA Koki, Kadoma-shi, Osaka 571-0057 (JP)
(74) Representative: Novagraaf International SA
(86) International application number: PCT/JP2024/010416
(87) International publication number: WO 2024/203497

(57) **Abstract**

In the temperature detection system, the resistance value of the thermosensitive element changes in accordance with temperature. The temperature detection circuit is disposed on the substrate in a state of being insulated from the frame ground. The positive wire connects the positive terminal of the thermosensitive element and the positive terminal of the temperature detection circuit. The negative wire connects a negative terminal of the thermosensitive element and a negative terminal of the temperature detection circuit. A resistor and a capacitor connected in series are connected between at least one of the positive wire and the negative wire and the frame ground.

## Description

### TECHNICAL FIELD

The present disclosure relates to a temperature detection system using a thermosensitive element such as a thermistor.

### BACKGROUND ART

An electro-magnetic compatibility (EMC) test is performed in the process of product development of an in-vehicle electronic control unit (ECU). In the EMC test, even if the ECU is operating normally, when a malfunction occurs in a sensor connected to the ECU, the malfunction occurs in the system to be developed, and the EMC test fails.

In an EMC test of an ECU to which a thermistor is connected, there is a bulk current injection (BCI) test in which high-frequency noise is injected into a wire harness connecting the thermistor and the ECU, and the frequency of the noise to be injected reaches 1 GHz in a high case. Specifically, the noise injector is clamped to each of the positive wire and the negative wire of the wire harness, and high-frequency noise is simultaneously injected into the positive wire and the negative wire.

If the impedances of the positive conductor line and the negative conductor line and the reflection characteristics between the wire harness and either the thermistor or the ECU are ideally equal, the injected noise reaches the thermistor in the same phase.

However, when there is an impedance difference between the positive conductor line and the negative conductor line or a reflection characteristic difference due to impedance mismatching at a connection point between the wire harness and the ECU, differences occur in voltage/current waveforms and propagation speeds of noise propagating to the positive and negative wire harnesses, and normal mode noise is generated when the noise reaches the thermistor. When normal mode noise is applied to both ends of the thermistor, the direction and magnitude of the current flowing through the thermistor vary, and a high-frequency current flows through the thermistor. This causes the thermistor to generate heat by itself, leading to erroneous temperature measurement. In the case of a negative temperature coefficient (NTC) thermistor, since the resistance value decreases when the temperature rises, the ECU side erroneously measures that the temperature of the monitoring target has risen.

Patent Literature 1 discloses a technique for suppressing conversion from common mode noise to normal mode noise by providing chip beads (B1, B2) in the vicinity of a connector (13) of a circuit device (10) to reduce an impedance difference between the wire harness (20s/20sg) and a chassis ground (30g) with respect to noise entering from the wire harness (20s/20sg) (see FIG. 1 of Patent Literature 1). This method is effective in suppressing the intrusion of noise into the substrate and the conversion of the intruding noise into the normal mode. However, when the noise reflected by the chip beads (B1, B2) propagates to the thermistor element (T1), the noise leads to self-heating of the thermistor element (T1).

### Citation List

### Patent Literature

Patent Literature 1: Patent Document 1: WO 19/026656

### SUMMARY OF THE INVENTION

The present disclosure has been made in view of such circumstances, and an object thereof is to provide a technique for suppressing a decrease in temperature measurement accuracy due to self-heating of a thermosensitive element.

In order to solve the above problem, a temperature detection system according to an aspect of the present disclosure includes: a thermosensitive element of which resistance value changes in accordance with temperature; a temperature detection circuit disposed on a substrate in a state of being insulated from a frame ground; a positive wire connecting a positive terminal of the thermosensitive element and a positive terminal of the temperature detection circuit; a negative wire connecting a negative terminal of the thermosensitive element and a negative terminal of the temperature detection circuit; and a resistor and a capacitor connected in series between at least one of the positive wire and the negative wire or the frame ground.

According to the present disclosure, it is possible to suppress a decrease in accuracy of temperature measurement caused by self-heating of the thermosensitive element.

### BRIEF DESCRIPTION OF THE DRAWINGS

[FIG. 1] FIG. 1 is a diagram illustrating an equivalent circuit of a circuit board, a wire harness, and a thermistor constituting a temperature detection system according to an embodiment.
[FIG. 2] FIG. 2 is a schematic diagram of noise propagating to both ends of a thermistor element.
[FIG. 3] FIG. 3 is a diagram illustrating a configuration example of the temperature detection system according to the first embodiment.
[FIG. 4] FIG. 4 is a diagram illustrating a configuration example of a temperature detection system according to a second embodiment.
[FIG. 5] FIG. 5 is a diagram illustrating a configuration example of a temperature detection system according to a third embodiment.

### DESCRIPTION OF EMBODIMENT

Parasitic components of resistance R and an inductance L, resistance R and an inductance L of an RC filter generally used as a filter, and the like are present on a conductor line between a plus terminal of the ECU and a plus terminal of the thermistor element Rt. Parasitic components of resistance R and the inductance L are present on a conductor line between a minus terminal of the ECU and a minus terminal of the thermistor element Rt. Parasitic components of capacitance C and capacitor C, such as an RC filter, are present between the positive conductor line and the negative conductor line. A parasitic component of capacitance C1 also exists between the ideal ground and each of the positive conductor line and the negative conductor line.

Parasitic components of resistance R and the inductance L are present on the conductor line between the plus terminal of the ECU and the plus terminal of the thermistor element Rt, and similarly, parasitic components of resistance R and the inductance L are present on the conductor line between the minus terminal of the ECU and the minus terminal of the thermistor element Rt. There is a parasitic component of capacitance C between the positive conductor line and the negative conductor line.

In the EMC test, circuit board 10, the wire harness WH, and thermistor 20 are placed on a copper plate forming a ground plane, and high-frequency noise is applied to the wire harness WH. The copper plate forming the ground plane corresponds to a body ground in an in-vehicle application. If the impedances of the positive conductor line and the negative conductor line are equal to each other and the reflection characteristics between the ECU or the thermistor connected to the wire harness WH are equal to each other, the noise radiated to the wire harness WH ideally travels in the same phase toward the ECU and the thermistor element Rt through the positive conductor line and the negative conductor line. The injected noise eventually penetrates the ECU or escapes to the ground plane by parasitic coupling.

If there is an impedance mismatch occurring at the boundary between the wire harness WH and the ECU connected to the end of the wire harness WH or an impedance mismatch occurring at the boundary between the wire harness WH and the thermistor element Rt connected to the end of the wire harness WH, the injected noise is reflected. When impedance mismatch occurs at each boundary between both ends of the wire harness, multiple reflection also occurs. When the reflection characteristics are different at both ends of the positive wire and the negative wire of the wire harness WH, normal mode noise is likely to occur.

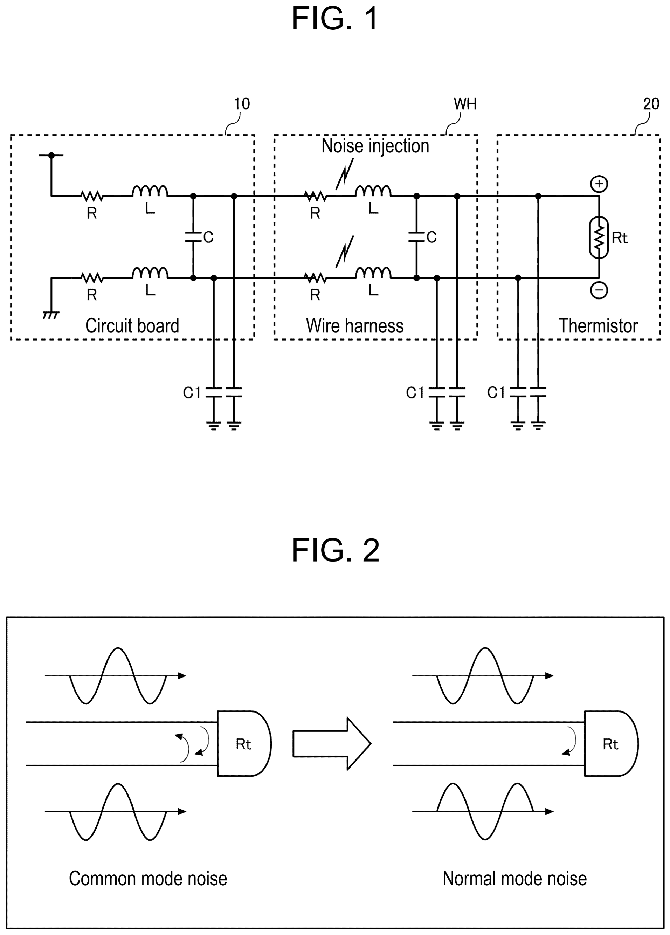

FIG. 2 is a diagram illustrating a schematic diagram of noise propagating to both ends of the thermistor element Rt. When the impedances of the positive conductor line and the negative conductor line and the reflection characteristics between the wire harness WH and the ECU/thermistor element are equal to each other, the noise currents propagating to both ends of the thermistor element Rt cancel each other out, and the current flowing through the thermistor Rt is ideally eliminated. That is, when currents having the same phase and the same amplitude enter both ends of the thermistor Rt, the currents cancel each other out and do not cause self-heating.

On the other hand, when the impedances of the positive conductor line and the negative conductor line and the reflection characteristics between the ECU and the thermistor element with respect to the wire harness WH are not equivalent, a phase/amplitude difference is likely to occur in noise propagating to both ends of the thermistor element Rt, and the noise is converted into normal mode noise. In this case, a high-frequency current flows through the thermistor element Rt, and self-heating of the thermistor element Rt becomes remarkable. That is, if the currents entering both ends of the thermistor Rt are not in the same phase, a current having a large current amplitude becomes dominant, which causes self-heating.

Hereinafter, in the present embodiment, a method of suppressing the self-heating of the thermistor element Rt will be presented.

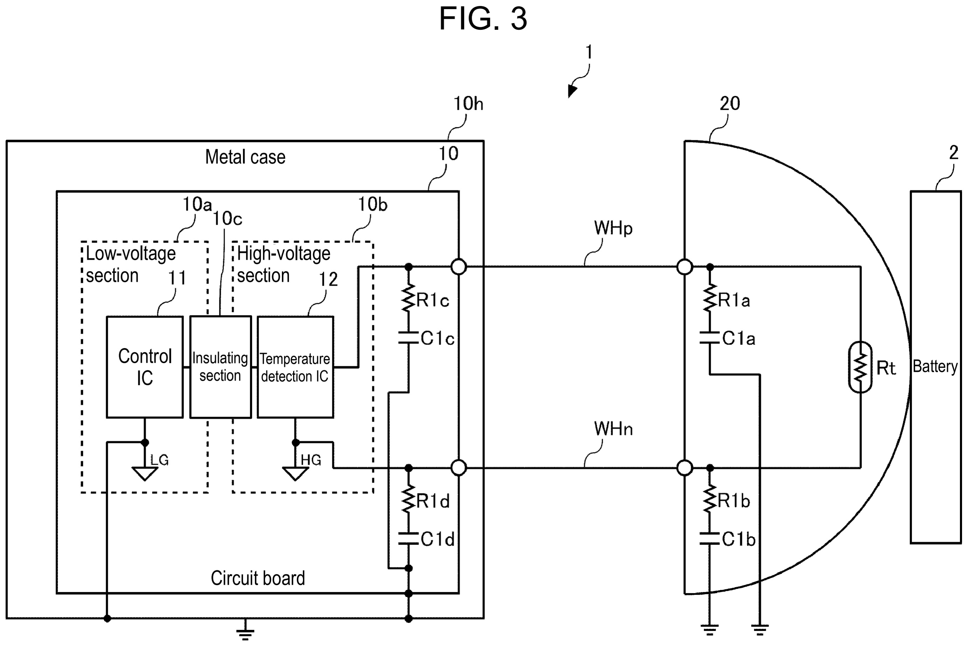

FIG. 3 is a diagram illustrating a configuration example of temperature detection system 1 according to the first embodiment. Temperature detection system 1 according to the first embodiment is a system for detecting a surface temperature of a cell included in driving battery 2 mounted on a vehicle. Driving battery 2 includes a plurality of cells (for example, lithium ion cells or nickel hydrogen cells) connected in series. For example, 96 lithium ion cells are connected in series to form a 400 V battery system.

One thermistor 20 is installed for every several cells in driving battery 2. Thermistor 20 includes a thermistor element Rt. The thermistor element Rt is one of thermosensitive elements whose resistance value changes in accordance with temperature. For example, an NTC thermistor whose resistance value decreases in accordance with a temperature rise is used as the thermistor element Rt. The thermistor element Rt is housed in a case in a state of being sealed with resin or glass, and is fixed with the surface of the case of thermistor 20 being in contact with the surface of the cell. Instead of thermistor 20, another thermosensitive element such as a thermocouple or a platinum resistor temperature detector may be used.

Control integrated circuit (IC) 11 and temperature detection IC 12 are mounted on circuit board 10 housed in metal case 10h. Control IC 11 is mounted on low-voltage section 10a of circuit board 10, and temperature detection IC 12 is mounted on high-voltage section 10b of circuit board 10. Temperature detection IC 12 is an integrated circuit for detecting a voltage, a temperature, and a current of a cell included in driving battery 2, and constitutes a battery management unit (BMU). Temperature detection IC 12 measures a divided voltage of a voltage dividing resistor (not shown) and the thermistor element Rt to measure the temperature of the cell in which the thermistor element Rt is installed.

In the present embodiment, since attention is paid to temperature detection, only temperature detection IC 12 is illustrated in high voltage section 10b of FIG. 3. Actually, an application specific integrated circuit (ASIC) and an analog front-end IC for detecting respective voltages of cells connected in series are also mounted on high-voltage section 10b. When the number of cells connected in series is large, a plurality of sub BMUs that monitor voltage, temperature, and current are provided. For example, in a 96-series lithium-ion cell system, twelve cells are monitored by each of eight distributed sub BMUs.

Control IC 11 functions as a main BMU for the sub BMUs. The power of control IC 11 is supplied from an auxiliary battery (not shown) (normally, a 12 V lead battery), and there is no contact with driving battery 2. On the other hand, the power of temperature detection IC 12 is supplied from driving battery 2, and there is no contact with the auxiliary battery.

The signal ground LG of low-voltage section 10a and the signal ground HG of high voltage section 10b are separated from each other. The signal ground LG of low-voltage section 10a is electrically connected to metal case 10h. Metal case 10h housing circuit board 10 is installed in a vehicle in a state of being electrically connected to a metal body (hereinafter, referred to as a body ground) of the vehicle. In the case of a vehicle, the body ground is the frame ground. The signal ground HG of high voltage section 10b is not electrically connected to metal case 10h, and high voltage section 10b of circuit board 10 is floated from the body ground. Therefore, temperature detection IC 12 is disposed on circuit board 10 in a state of being insulated from the body ground.

The main BMU of low-voltage section 10a and each of the sub BMUs of high-voltage section 10b are connected by a communication line via an insulating unit 10c. For example, a transformer or a capacitor can be used as the insulating section 10c.

The positive wire WHp of the wire harness WH connects the positive terminal of the thermistor element Rt and the positive terminal of temperature detection IC 12. The negative wire WHn of the wire harness WH connects the negative terminal of the thermistor element Rt and the negative terminal of temperature detection IC 12. The high-frequency noise superimposed on the wire harness WH is likely to be reflected at the impedance mismatch point. The impedance mismatch increases at the connection point between the wire harness WH and circuit board 10 and the connection point between the wire harness WH and thermistor 20.

In particular, since the characteristic impedance of thermistor 20 is extremely larger than the characteristic impedance of the wire harness WH, the connection point with thermistor 20 looks like an open end when viewed from the wire harness WH. For example, while the characteristic impedance of the wire harness WH used in the embodiment is about 350Ω, the characteristic impedance of thermistor 20 used in the embodiment is about 1 kΩ at room temperature, and reflection of high-frequency noise is likely to occur at the connection point with thermistor 20.

On the other hand, in the present embodiment, RC termination is performed between the body ground and a connection portion of the positive wire WHp and the thermistor element Rt (hereinafter, the connection portion is referred to as a first connection portion) so that the characteristic impedance of the positive wire WHp of the wire harness WH and the characteristic impedance of the thermistor element Rt match each other. In the first embodiment, first termination resistance R1a and first termination capacitor C1a (hereinafter the RC circuit is referred to as a first termination circuit) connected in series are connected between the first connection portion and the body ground.

Similarly, RC termination is performed between the body ground and a connection portion of the negative wire WHn and the thermistor element Rt (hereinafter, the connection portion is referred to as a second connection portion) so that the characteristic impedance of the negative wire WHn of the wire harness WH matches the characteristic impedance of the thermistor element Rt. In the first embodiment, second termination resistance R1b and second termination capacitor C1b (hereinafter the RC circuit is referred to as a second termination circuit) connected in series are connected between the second connection portion and the body ground.

The first termination circuit and the second termination circuit are preferably connected to the positive lead wire and the negative lead wire inside thermistor 20, respectively. However, when the cost of thermistor 20 is higher than an allowable cost, the first termination circuit and the second termination circuit may be connected to the termination of the positive wire WHn and the termination of the negative wire WHn of the wire harness WH, respectively.

The first termination circuit and the second termination circuit are not necessarily required to completely match the characteristic impedance of the wire harness WH and the characteristic impedance of the thermistor element Rt. It is sufficient that the first termination circuit and the second termination circuit have characteristic impedances at least close to each other.

Further, in the present embodiment, RC termination is performed between the body ground and a connection portion of the positive wire WHp and circuit board 10 (hereinafter, the connection portion is referred to as a third connection portion) so that the characteristic impedance of the positive wire WHp of the wire harness WH matches the characteristic impedance of circuit board 10. In the first embodiment, third termination resistance R1c and third termination capacitor C1c (hereinafter the RC circuit is referred to as a third termination circuit) connected in series are connected between the third connection portion and the body ground.

Similarly, in order to match the characteristic impedance of the negative wire WHn of the wire harness WH with the characteristic impedance of circuit board 10, RC termination is performed between the body ground and a connection portion of the negative wire WHn and circuit board 10 (hereinafter, the connection portion is referred to as a fourth connection portion). In the first embodiment, fourth termination resistance R1d and fourth termination capacitor C1d (hereinafter the RC circuit is referred to as a fourth termination circuit) connected in series are connected between the fourth connection portion and the body ground.

The third termination circuit and the fourth termination circuit may be disposed outside or inside the terminals of circuit board 10. For example, a plurality of third termination circuits and a plurality of fourth termination circuits are collectively arranged at one location on circuit board 10, and the arrangement locations of the termination circuits are electrically connected to the screw holes. The plurality of third termination circuits and the plurality of fourth termination circuits may be connected to the body ground by passing metal screws through the screw holes and fixing circuit board 10 to metal case 10h.

The third termination circuit and the fourth termination circuit are not necessarily required to completely match the characteristic impedance of the wire harness WH and the characteristic impedance of circuit board 10. It is sufficient that the third termination circuit and the fourth termination circuit have characteristic impedances at least close to each other.

First termination resistance R1a to fourth termination resistance R1d each attenuates the energy of the noise by converting the reflected wave of the noise into heat. First termination capacitor C1a to fourth termination capacitor C1d each provides DC insulation between the wire harness WH and the body ground. In a case where first termination capacitor C1a to fourth termination capacitor C1d are not provided, there is a risk of electric shock when a person touches the wire harness WH while touching the body of the vehicle, and thus DC insulation is required. When first termination capacitor C1a to fourth termination capacitor C1d are not provided, a direct current flows from the conductor line to the body ground, and thus unnecessary power consumption occurs.

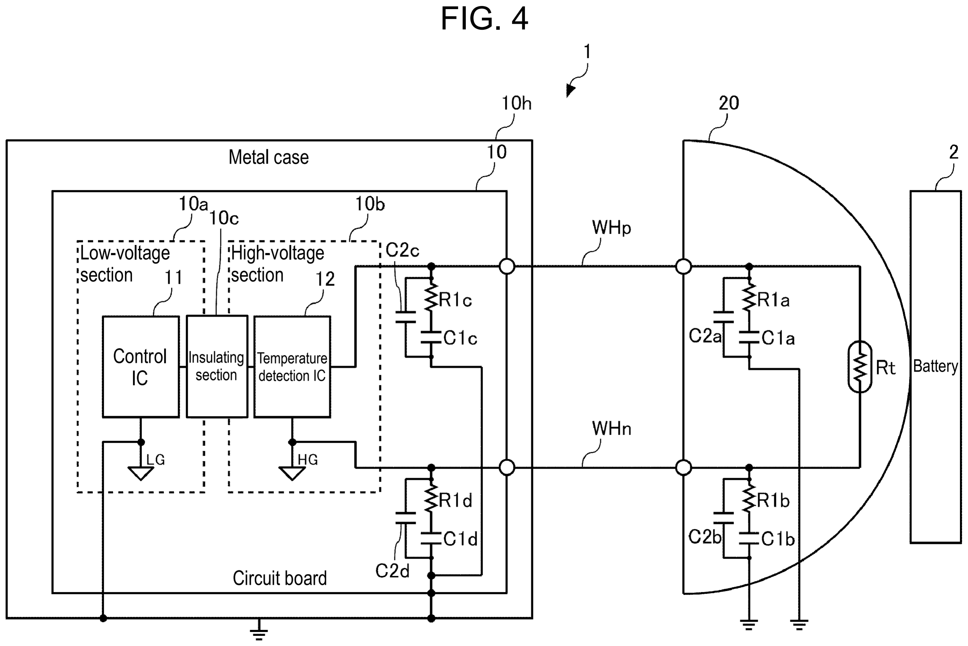

FIG. 4 is a diagram illustrating a configuration example of temperature detection system 1 according to the second embodiment. Temperature detection system 1 according to the second embodiment illustrated in FIG. 4 is different from temperature detection system 1 according to the first embodiment illustrated in FIG. 3 in the configurations of the first termination circuit to the fourth termination circuit. In the first termination circuit, first-second termination capacitor C2a is further connected in parallel to first termination resistance R1a and first termination capacitor C1a connected in series. In the second termination circuit, second-second termination capacitor C2b is further connected in parallel to second termination resistance R1b and second termination capacitor C1b connected in series. In the third termination circuit, third-second termination capacitor C2c is further connected in parallel to third termination resistance R1c and third termination capacitor C1c connected in series. In the fourth termination circuit, forth-second termination capacitor C2d is further connected in parallel to fourth termination resistance R1d and fourth termination capacitor C1d connected in series.

Adding first-second termination capacitor C2a to fourth-second termination capacitor C2d facilitates impedance adjustment of the first termination circuit to the fourth termination circuit, and may facilitate matching of characteristic impedance between the wire harness WH and the thermistor element Rt or matching of characteristic impedance between the wire harness WH and circuit board 10.

When first termination capacitor C1a to fourth termination capacitor C1d or first-second termination capacitor C2a to fourth-second termination capacitor C2d have low capacitance, parasitic capacitance between the ground plane and either the microstrip line or the strip line of circuit board 10 may be used without using the capacitor element. Parasitic capacitance between wirings arranged in parallel may be used.

The plurality of cells included in driving battery 2 are often housed in a metal case in a state of being restrained by a resin frame and installed in a vehicle. In this case, parasitic capacitance between the cell and the metal case can be used. In particular, when the number of thermistor elements Rt is large, it is effective to use the parasitic capacitance between the cell and the metal case. As described above, at least one of first termination capacitor C1a to fourth termination capacitor C1d or first-second termination capacitor C2a to forth-second termination capacitor C2d may be formed by a physical structure of a component.

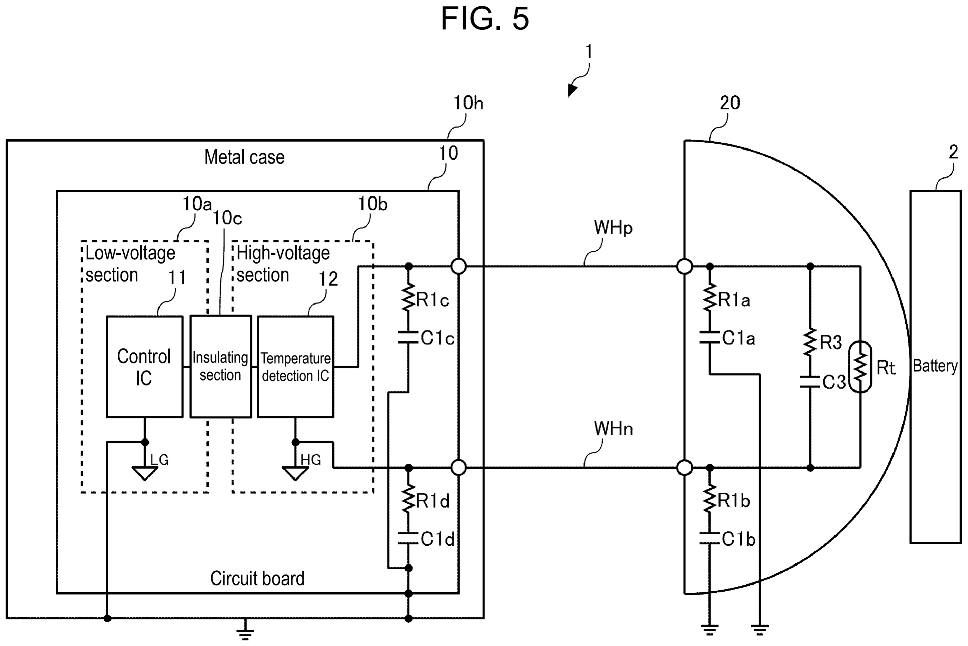

FIG. 5 is a diagram illustrating a configuration example of temperature detection system 1 according to the third embodiment. Temperature detection system 1 according to the third embodiment illustrated in FIG. 5 has a configuration in which a fifth termination circuit is added to the configuration of temperature detection system 1 according to the first embodiment illustrated in FIG. 3. The fifth termination circuit is connected in parallel between the positive terminal and the negative terminal of thermistor element Rt, and includes line resistance R3 and line capacitor C3 connected in series. Line resistance R3 attenuates the energy of the noise by converting the reflected wave of the noise into heat. Line capacitor C3 interrupts the direct current.

The fifth termination circuit is preferably connected between the positive lead wire and the negative lead wire inside thermistor 20, but may be connected between the positive wire WHn and the negative wire WHn of the wire harness WH when the cost of thermistor 20 is higher than an allowable cost. The fifth termination circuit may be connected between the signal line of low-voltage section 10a and the signal ground LG.

Although not illustrated, a configuration in which a fifth termination circuit is added to the configuration of temperature detection system 1 according to the second embodiment illustrated in FIG. 4 is also possible.

As described above, according to the present embodiment, by connecting the RC termination circuit between the conductor line and the body ground, it is possible to suppress a decrease in temperature measurement accuracy due to self-heating of the thermistor element Rt. By suppressing the reflection of the high-frequency noise by the RC termination circuit, the distortion of the noise waveform can be suppressed, and the conversion from the common mode noise to the normal mode noise can be suppressed. High-frequency noise can be converted into thermal energy by the resistor of the RC termination circuit, and the high-frequency noise can be released to the body ground while being DC insulated from the body ground by the capacitor of the RC termination circuit.

The present disclosure has been described above based on the embodiments. The embodiment is intended to be illustrative only and it will be obvious to those skilled in the art that various modifications to constituting elements and processes could be developed and that such modifications are also within the scope of the present disclosure.

In the above embodiment, temperature detection IC 12 is mounted on high-voltage section 10b, but may be mounted on low-voltage section 10a. Since the thermistor element Rt is not electrically connected to the cell of driving battery 2, the voltage across the thermistor element Rt can be handled by low-voltage section 10a.

In the above embodiment, the first termination circuit to the fourth termination circuit are connected to the first connection portion to the fourth connection portion, respectively. In this regard, the first termination circuit and the second termination circuit may be connected to the first connection portion and the second connection portion, respectively, and the third termination circuit and the fourth termination circuit may be omitted. Conversely, the third termination circuit and the fourth termination circuit may be connected to the third connection portion and the fourth connection portion, respectively, and the first termination circuit and the second termination circuit may be omitted. Although the noise reduction effect is reduced as compared with the case where all of the first termination circuit to the fourth termination circuit are connected, the cost can be suppressed. Even when only one of the first termination circuit to the fourth termination circuit is connected, the effect of reducing the potential difference when high-frequency noise is applied to both ends of the thermistor element Rt is obtained, and the effect of reducing the self-heating amount of the thermistor element Rt is obtained.

In the above embodiment, an example in which the temperature of the cell of driving battery 2 mounted on the vehicle is detected has been described. However, temperature detection system 1 according to the present embodiment can also be applied to applications for detecting the temperature of a battery other than in-vehicle applications. The present invention can also be applied to applications for detecting the temperature of a load other than a battery.

The exemplary embodiment may be specified by the following items.

### [Item 1]

A temperature detection system comprising: a thermosensitive element (Rt) of which resistance value changes in accordance with a temperature; a temperature detection circuit (12) disposed on a substrate (10) in a state of being insulated from a frame ground; a positive wire (WHp) connecting a positive terminal of the thermosensitive element (Rt) and a positive terminal of the temperature detection circuit; a negative wire (WHn) connecting a negative terminal of the thermosensitive element (Rt) and a negative terminal of the temperature detection circuit; and a resistor (R1) and a capacitor (C1) connected in series between the frame ground and at least one of the positive wire (WHp) or the negative wire (WHn).

According to this configuration, it is possible to suppress a decrease in temperature measurement accuracy due to self-heating of the thermistor element (Rt) caused by application of high-frequency noise.

### [Item 2]

The temperature detection system (1) according to Item 1, wherein the resistor (R1) and the capacitor (C1) connected in series include: a resistor (R1c) and a capacitor (C1c) connected in series between the frame ground and a connection portion of the positive wire (WHp) and the substrate (10) to cause a characteristic impedance of the positive wire (WHp) with respect to the frame ground to match a characteristic impedance of the substrate (10) with respect to the frame ground; and a resistor (R1d) and a capacitor (C1d) connected in series between the frame ground and a connection portion of the negative wire (WHn) and the substrate (10) to cause a characteristic impedance of the negative wire (WHn) with respect to the frame ground to match a characteristic impedance of the substrate (10) with respect to the frame ground.

According to this configuration, it is possible to reduce the high-frequency noise applied to the wiring (WH) while bringing the characteristic impedance with respect to the frame ground between the wiring (WH) and the substrate (10) close to each other.

### [Item 3]

The temperature detection system (1) according to Item 1, wherein the resistor (R1) and the capacitor (C1) connected in series include: a resistor (R1a) and a capacitor (C1a) connected in series between the frame ground and a connection portion of the positive wire (WHp) and the thermosensitive element (Rt) to cause a characteristic impedance of the positive wire (WHp) with respect to the frame ground and a characteristic impedance of the thermosensitive element (Rt) with respect to the frame ground match each other; and a resistor (R1b) and a capacitor (C1b) connected in series between the frame ground and a connection portion of the negative wire (WHn) and the thermosensitive element (Rt) to cause a characteristic impedance of the negative wire (WHn) with respect to the frame ground and a characteristic impedance of the thermosensitive element (Rt) with respect to the frame ground match each other.

According to this, it is possible to reduce the high-frequency noise applied to the wiring (WH) while bringing the characteristic impedance with respect to the frame ground between the wiring (WH) and the thermosensitive element (Rt) close to each other.

### [Item 4]

The temperature detection system (1) according to Item 1, wherein the resistor (R1) and the capacitor (C1) connected in series include: a resistor (R1c) and a capacitor (C1c) connected in series between the frame ground and the connection portion of the positive wire (WHp) and the substrate (10) to cause the characteristic impedance of the positive wire (WHp) with respect to the frame ground to match the characteristic impedance of the substrate (10) with respect to the frame ground; a resistor (R1d) and a capacitor (C1d) connected in series between the frame ground and the connection portion of the negative wire (WHn) and the substrate (10) to cause the characteristic impedance of the negative wire (WHn) with respect to the frame ground to match the characteristic impedance of the substrate (10) with respect to the frame ground; a resistor (R1a) and a capacitor (C1a) connected in series between the frame ground and the connection portion of the positive wire (WHp) and the thermosensitive element (Rt) to cause the characteristic impedance of the positive wire (WHp) with respect to the frame ground to match the characteristic impedance of the thermosensitive element (Rt) with respect to the frame ground; and a resistor (R1b) and a capacitor (C1b) connected in series between the frame ground and the connection portion of the negative wire (WHn) and the thermosensitive element (Rt) and the frame ground to cause the characteristic impedance of the negative wire (WHn) with respect to the frame ground to match the characteristic impedance of the thermosensitive element (Rt) with respect to the frame ground.

According to this configuration, it is possible to reduce the high-frequency noise applied to the wiring (WH) while bringing the characteristic impedance with respect to the frame ground between the wiring (WH) and the substrate (10) close to the characteristic impedance with respect to the frame ground between the wiring (WH) and the thermosensitive element (Rt).

### [Item 5]

The temperature detection system (1) according to any one of items 1 to 4, further comprising a capacitor (C2) connected in parallel to the resistor (R1) and the capacitor (C1) connected in series.

According to this configuration, more flexible impedance adjustment can be performed.

### [Item 6]

The temperature detection system (1) according to any one of items 1 to 4, further comprising a resistor (R3) and a capacitor (C3) connected in series between a positive terminal and a negative terminal of the thermosensitive element (Rt).

According to this configuration, the high-frequency noise applied to the wiring (WH) can be further reduced.

### [Item 7]

Temperature detection system (1) according to any one of items 1 to 4, wherein the capacitor (C1) is constituted by parasitic capacitance (C1).

According to this configuration, the number of capacitor elements can be reduced.

### Reference Signs List

1 temperature detection system, 2 driving battery, 10 circuit board, 10a low-voltage section, 10b high-voltage section, 10c insulating section, 10h metal case, 11 control IC, 12 temperature detection IC, 20 thermistor, WH wire harness, WHp positive wire, WHn negative wire, Rt thermistor element, R1 termination resistor, R3 line resistor, C1 first termination capacitor, C2 second termination capacitor, C3 line capacitor.

## Claims

1. A temperature detection system comprising:
a thermosensitive element of which resistance value changes in accordance with a temperature;
a temperature detection circuit disposed on a substrate in a state of being insulated from a frame ground;
a positive wire connecting a positive terminal of the thermosensitive element and a positive terminal of the temperature detection circuit;
a negative wire connecting a negative terminal of the thermosensitive element and a negative terminal of the temperature detection circuit; and
at least one resistor-capacitor pair connected in series between the frame ground and at least one of the positive wire or the negative wire.

2. The temperature detection system according to claim 1, wherein the at least one resistor-capacitor pair connected in series includes:
a first resistor and a first capacitor connected in series between the frame ground and a connection portion of the positive wire and the substrate to cause a characteristic impedance of the positive wire with respect to the frame ground to match a characteristic impedance of the substrate with respect to the frame ground; and
a second resistor and a second capacitor connected in series between the frame ground and a connection portion of the negative wire and the substrate to cause a characteristic impedance of the negative wire with respect to the frame ground to match a characteristic impedance of the substrate with respect to the frame ground.

3. The temperature detection system according to claim 1, wherein the at least one resistor-capacitor pair connected in series include:
a third resistor and a third capacitor connected in series between the frame ground and a connection portion of the positive wire and the thermosensitive element to cause a characteristic impedance of the positive wire with respect to the frame ground to match a characteristic impedance of the thermosensitive element with respect to the frame ground; and a fourth resistor and
a fourth resistor and a fourth capacitor connected in series between the frame ground and a connection portion of the negative wire and the thermosensitive element to cause a characteristic impedance of the negative wire with respect to the frame ground to match a characteristic impedance of the thermosensitive element with respect to the frame ground.

4. The temperature detection system according to claim 1, wherein the at least one resistor-capacitor pair connected in series include:
a first resistor and a first capacitor connected in series between the frame ground and a connection portion of the positive wire and the substrate to cause a characteristic impedance of the positive wire with respect to the frame ground to match a characteristic impedance of the substrate with respect to the frame ground;
a second resistor and a second capacitor connected in series between the frame ground and a connection portion of the negative wire and the substrate to cause a characteristic impedance of the negative wire with respect to the frame ground to match a characteristic impedance of the substrate with respect to the frame ground;
a third resistor and a third capacitor connected in series between the frame ground and a connection portion of the positive wire and the thermosensitive element to cause a characteristic impedance of the positive wire with respect to the frame ground to match a characteristic impedance of the thermosensitive element with respect to the frame ground; and
a fourth resistor and a fourth capacitor connected in series between the frame ground and a connection portion of the negative wire and the thermosensitive element to cause a characteristic impedance of the negative wire with respect to the frame ground to match a characteristic impedance of the thermosensitive element with respect to the frame ground.

5. The temperature detection system according to any one of claims 1 to 4, further comprising a capacitor connected in parallel to the at least one resistor-capacitor pair connected in series.

6. The temperature detection system according to any one of claims 1 to 4, further comprising a resistor-capacitor pair connected in series between a positive terminal and a negative terminal of the thermosensitive element.

7. The temperature detection system according to any one of claims 1 to 4, wherein at least one capacitor of the at least one resistor-capacitor pair connected in series is constituted by a parasitic capacitance.
